# EUROPEAN PATENT APPLICATION

(11) **EP 2 589 892 A1**
(43) Date of publication of application: **08.05.2013**
(21) Application number: 11800069.4
(22) Date of filing: 10.03.2011
(51) Int. Cl.: F24F 13/28, F24F 3/16, B01D 46/42

(54) **AUTOMATIC DUST-REMOVING AND CLEANING DEVICE FORFILTER NET OF AIR-CONDITIONER**

(30) Priority: 29.06.2010 CN 201010214895
(71) Applicant: Guangdong Chigo Air-conditioning Co., Ltd., Foshan, Guangdong 528244 (CN)
(72) Inventor: PAN, Wen, Foshan Guangdong 528244 (CN); CHI, Yuanjing, Foshan Guangdong 528244 (CN); LIN, Kun, Foshan Guangdong 528244 (CN); QIN, Xiaoding, Foshan Guangdong 528244 (CN); LIU, Yang, Foshan Guangdong 528244 (CN)
(74) Representative: Harrison Goddard Foote
(86) International application number: PCT/CN2011/071676
(87) International publication number: WO 2012/000324

(57) **Abstract**

Disclosed is an automatic dust-removing and cleaning device for a filter net of an air-conditioner which has a filter net (2) with an end to end sealing ring structure. The filter net (2) comprises a net frame (21) provided with gear sockets (211), and a mesh (22). A driving gear (5) is installed at one corner of an air inlet frame (1) of the air conditioner and meshed with the gear sockets (211) of the net frame (21). Driven gears (6) are installed at the other three corners of the air inlet frame (1) of the air conditioner and meshed with the gear sockets (211) of the net frame (21). A drive mechanism (12) drives the driving gear (5) to rotate. A dust-collecting box (3) is installed at the bottom of the air inlet frame (1) of the air conditioner and provided with a water inlet and a water outlet. The water inlet is connected to a water inlet pipe (8) and the water outlet is connected to a water outlet pipe (9). A dust removing brush (4) is installed on the dust-collecting box (3), located below the filter net (2) and in contact with the filter net (2) simultaneously.

## Description

The present application claims the benefit of priority to Chinese patent application No. 201010214895.0 titled "AUTOMATIC DUST-REMOVING AND CLEANING DEVICE FOR FILTER NET OF AIR-CONDITIONER", filed with the Chinese State Intellectual Property Office on June 29, 2010. The entire disclosure thereof is incorporated herein by reference.

### FIELD OF THE INVENTION

The present application relates to the field of air conditioner accessories, and in particular to an automatic dust-removing and cleaning device for a filter screen of an air conditioner.

### BACKGROUND OF THE INVENTION

After being used for a period of time, a filter screen of an air conditioner may accumulate dust thereon, and if the filter screen is not cleaned in time, the accumulated dust on the filter screen may be too much, resulting in blocked meshes and poor ventilation. When the air conditioner is running, the air flowing resistance at the air inlet may be increased, and thus the energy consumption is increased, which may affect the cooling and heating effect and be adverse to the overall operation of the air conditioner. Further, the filter screen with excessive accumulated dust may encourage the growth of bacteria, thereby causing a secondary pollution to the indoor air and affecting the quality of the indoor air. At present, most filter screens of the air conditioners are dust-removed by disassembling the filter screen manually and cleaning. In the cleaning process, parts of the air conditioner, such as the panel, have to be opened, and then the filter screen is disassembled. When the filter screen is cleaned, the filter screen has to be remounted, which is time-consuming and laborious, and is inconvenient to the user.

### SUMMARY OF THE INVENTION

An object of the present application is to provide an automatic dust-removing and cleaning device for a filter screen of an air conditioner for overcoming disadvantages of the prior art, which may automatically remove the accumulated dust on the filter screen without the need for disassembling the air conditioner and taking the filter screen out, and avoid the trouble that a user has to clean the filter screen manually.

For solving the above technical problems, the technical solution of the present application provides an automatic dust-removing and cleaning device for a filter screen of an air conditioner, including a filter screen, a driving mechanism, a driving gear, driven gears, a dust-removing brush and a dust-collecting box, wherein
the filter screen is of a closed ring structure connected in an end-to-end manner, and includes a screen frame provided with tooth grooves, and a screen wires;
the driving gear is mounted at one corner of an air inlet frame of the air conditioner and is engaged with the tooth grooves of the screen frame, each of the driven gears is mounted at each of other three corners of the air inlet frame of the air conditioner and is engaged with the tooth grooves of the screen frame, and the driving mechanism drives the driving gear to rotate;
the dust-collecting box is mounted at a bottom of the air inlet frame of the air conditioner, and is provided with a water inlet connected to a water inlet pipe, and a water outlet connected to a water outlet pipe; and
the dust-removing brush is mounted above the dust-collecting box, is located below the filter screen and is in contact with the filter screen.

Preferably, the driving gear includes one end connected to the air inlet frame of the air conditioner via a bearing, and the other end drivably connected to the driving mechanism via a connecting rod.

Preferably, the driving gear includes a gear, a stepped shaft and a position limiting member, and the gear is mounted on the stepped shaft, is fixed by the position limiting member, and is provided with a position limiting plate for avoiding mismatch between the filter screen and the gear.

Preferably, the driven gear includes one end connected to the air inlet frame of the air conditioner via a bearing, and the other end connected to a fixing plate, and the fixing plate is mounted on the air inlet frame of the air conditioner.

Preferably, the driven gear includes a gear, a stepped shaft and a position limiting member, and the gear is mounted on the stepped shaft, is fixed by the position limiting member, and is provided with a position limiting plate for avoiding mismatch between the filter screen and the gear.

Preferably, the bearing is made from POM material and is provided with an elastic snap for limiting position.

Preferably, the water inlet pipe connected to the water inlet of the dust-collecting box is connected to a water mouth of a water pan of the air conditioner, and the water outlet pipe connected to the water outlet of the dust-collecting box is connected to an outdoor drain system of the air conditioner.

Preferably, the closed ring structure of the filter screen is formed in the end-to-end manner by adhering, welding or screwing.

Preferably, the driving mechanism is an electric motor electrically connected to a control board of the air conditioner and mounted on the air inlet frame of the air conditioner via an electric motor mounting plate.

Preferably, the screen wires are high-density screen wires and have been soaked with a mildew-proof and antibacterial liquid medicine.

In the automatic dust-removing and cleaning device for the filter screen of the air conditioner provided by the present application, the filter screen is of a closed ring structure connected in an end-to-end manner, and includes a screen frame provided with tooth grooves, and a screen wires; the driving gear is mounted at one corner of an air inlet frame of the air conditioner and is engaged with the tooth grooves of the screen frame; each of the driven gears is mounted at each of other three corners of the air inlet frame of the air conditioner and is engaged with the tooth grooves of the screen frame; the driving mechanism drives the driving gear to rotate; the dust-collecting box is mounted at a bottom of the air inlet frame of the air conditioner, and is provided with a water inlet connected to a water inlet pipe, and a water outlet connected to a water outlet pipe; and the dust-removing brush is mounted above the dust-collecting box, is located below the filter screen and is in contact with the filter screen. In the automatic dust-removing and cleaning device for the filter screen of the air conditioner provided by the present application, the driving mechanism drives the driving gear to rotate, and the driving gear is engaged with the tooth grooves of the screen frame so as to drive the filter screen to rotate. Since the dust-removing brush is located below the filter screen and is in contact with the filter screen, when the filter screen is rotating, the dust-removing brush may automatically remove the accumulated dust on the filter screen, and the accumulated dust may fall into the dust-collecting box. The accumulated dust in the dust-collecting box is washed out of the air conditioner by flowing water. Compared with the prior art, the automatic dust-removing and cleaning device for the filter screen of the air conditioner provided by the present application may automatically remove the accumulated dust on the filter screen without the need for disassembling the air conditioner and taking the filter screen out, and avoid the trouble that the user has to clean the filter screen manually.

Specifically, in the automatic dust-removing and cleaning device for the filter screen of the air conditioner provided by the present application, the water inlet pipe connected to the water inlet of the dust-collecting box is connected to the water mouth of the water pan of the air conditioner, and the water outlet pipe connected to the water outlet of the dust-collecting box is connected to the outdoor drain system of the air conditioner, such that the accumulated dust removed from the filter screen may be flushed to the outside by the condensing water generated during the working process of the air conditioner directly.

### BRIEF DESCRIPTION OF THE DRAWINGS

Figure 1 is an assembling schematic view of an automatic dust-removing and cleaning device for a filter screen of an air conditioner having an air inlet frame of the air conditioner according to the present application;

Figure 2 is an assembling schematic view of the automatic dust-removing and cleaning device for the filter screen of the air conditioner in Figure 1, which has no the air inlet frame of the air conditioner;

Figure 3 is a schematic view of the structure of the automatic dust-removing and cleaning device for the filter screen of the air conditioner in the present application;

Figure 4 is a schematic view of the structure of the filter screen in Fig. 3;

Figure 5 is a schematic view of the structure of a driving gear in Fig. 3;

Figure 6 is a schematic view of the structure of a driven gear in Fig. 3; and

Figure 7 is a schematic view of the structure of a bearing in Fig. 3.

### DETAILED DESCRIPTION OF THE EMBODIMENTS

For those skilled in the art to better understand technical solutions of the present application, the present application will be described further in conjunction with drawings and embodiments hereinafter.

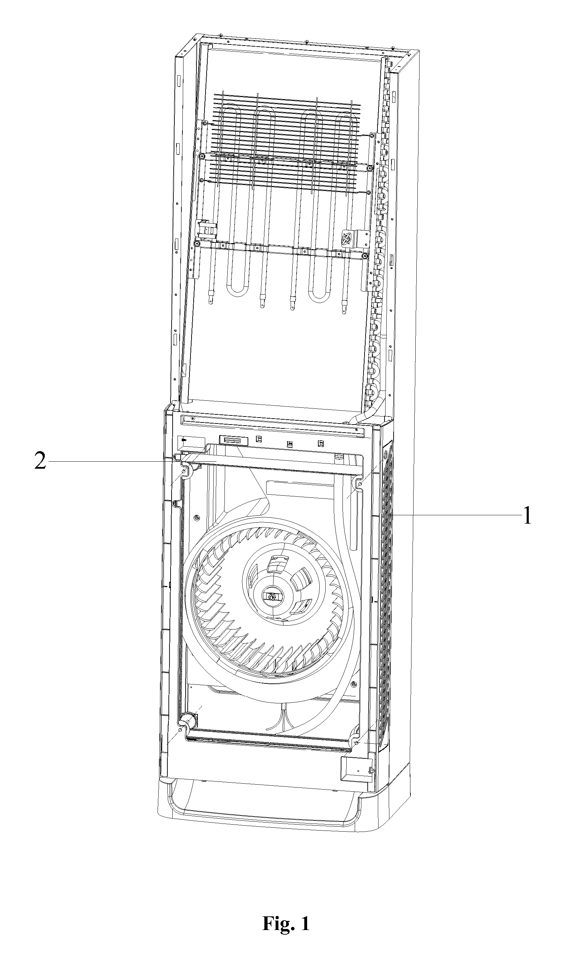

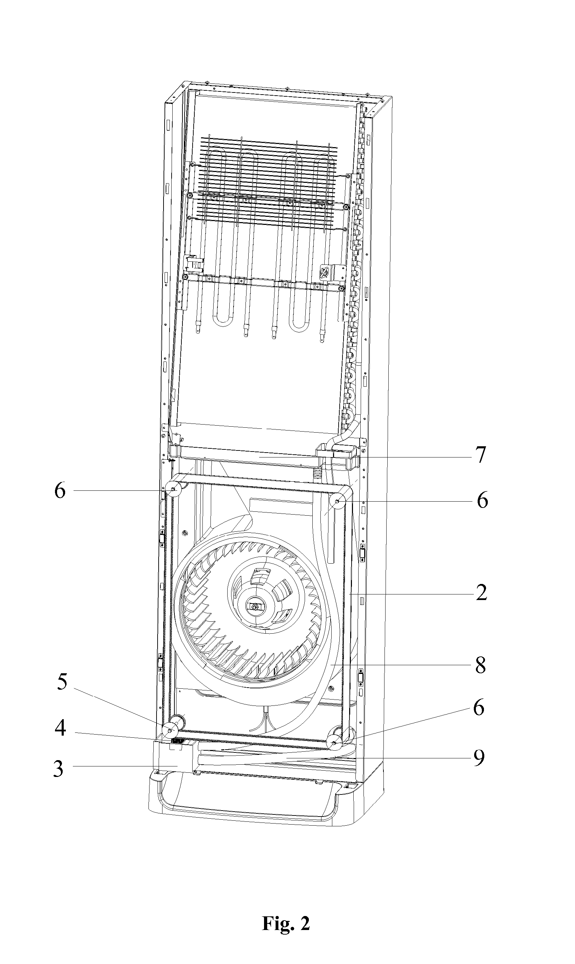

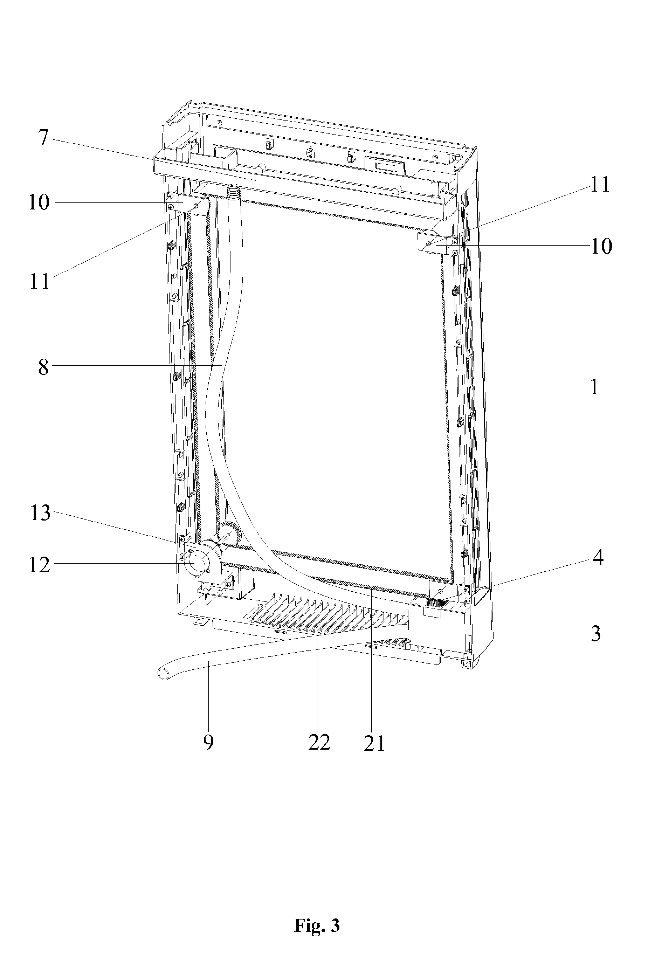

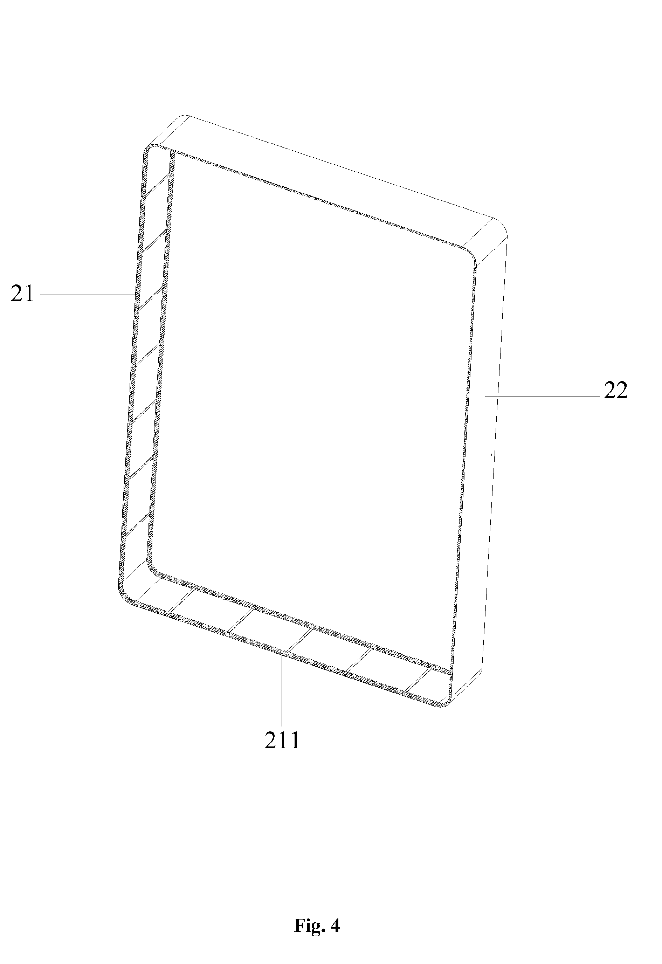

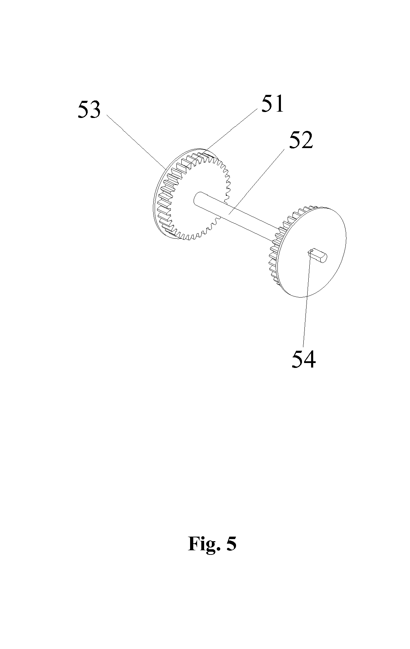

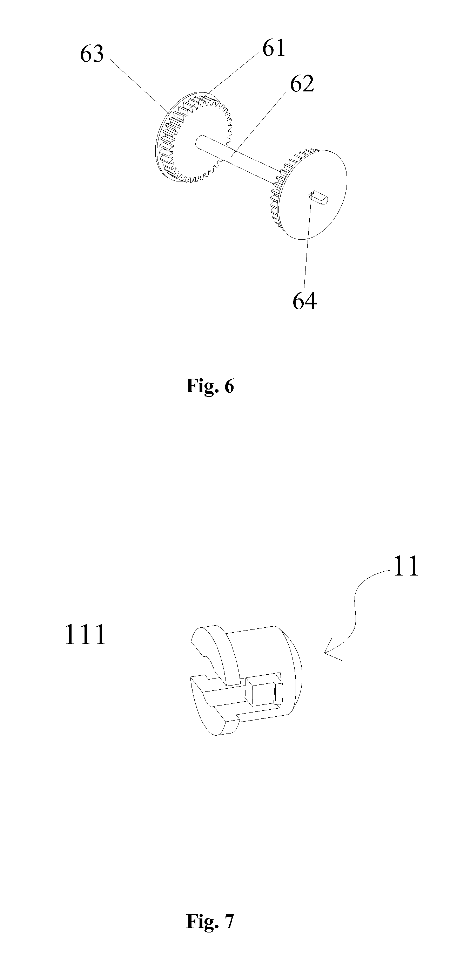

References are made to Figs. 1 to 7, wherein Figure 1 is an assembling schematic view of an automatic dust-removing and cleaning device for a filter screen of an air conditioner having an air inlet frame of the air conditioner according to the present application; Figure 2 is an assembling schematic view of the automatic dust-removing and cleaning device for the filter screen of the air conditioner in Figure 1, which has no the air inlet frame of the air conditioner; Figure 3 is a schematic view of the structure of the automatic dust-removing and cleaning device for the filter screen of the air conditioner in the present application; Figure 4 is a schematic view of the structure of the filter screen in Fig. 3; Figure 5 is a schematic view of the structure of a driving gear in Fig. 3; Figure 6 is a schematic view of the structure of a driven gear in Fig. 3; and Figure 7 is a schematic view of the structure of a bearing in Fig. 3.

In this embodiment, the air conditioner is provided with three air inlets located at a left side, a right side and a lower side of an air inlet frame 1 of the air conditioner respectively.

The structure of the automatic dust-removing and cleaning device for the filter screen of the air conditioner according to the present application is described as follows.

A filter screen 2 is of a closed ring structure connected in end-to-end manner by adhering, welding or screwing. The filter screen 2 includes a screen frame 21 provided with tooth grooves 211, and screen wires 22. The screen wires 22 are high-density screen wires and have been pre-soaked in a mildew-proof and antibacterial liquid medicine.

A driving gear 5 is mounted at one corner of the air inlet frame 1 of the air conditioner and is engaged with the tooth grooves 211 of the screen frame 21. The driving gear 5 includes a gear 51, a stepped shaft 52 and a position limiting member 54. The gear 51 is mounted on the stepped shaft 52 and is fixed by the position limiting member 54, and is provided with a position limiting plate 53 for avoiding a mismatch between the filter screen 2 and the gear 51. The driving gear 5 includes one end connected to the air inlet frame 1 of the air conditioner via a bearing 11, and the other end drivably connected to an electric motor 12 via a connecting rod (not shown). The electric motor 12 drives the driving gear 5 to rotate.

Driven gears 6 are mounted at the other three corners of the air inlet frame 1 of the air conditioner and engaged with the tooth grooves of the screen frame 21. The driven gear 6 has the same structure as the driving gear 5, includes a gear 61, a stepped shaft 62 and a position limiting member 64. The gear 61 is mounted on the stepped shaft 62 and is fixed by the position limiting member 64, and is provided with a position limiting plate 63 for avoiding mismatch between the filter screen 2 and the gear 61. The driven gear 6 includes one end connected to the air inlet frame 1 of the air conditioner via a bearing 11, and the other end connected to a fixing plate 10. The fixing plate 10 is mounted on the air inlet frame 1 of the air conditioner.

A dust-collecting box 3 is mounted at a bottom of the air inlet frame 1 of the air conditioner, and is provided with a water inlet and a water outlet. The water inlet is connected to a water inlet pipe 8 connected to a water mouth of a water pan 7 of the air conditioner; and the water outlet is connected to a water outlet pipe 9 connected to an outdoor drain system of the air conditioner.

A dust-removing brush 4 is mounted above the dust-collecting box 3, is located below the filter screen 2 and is in contact with the filter screen 2.

The bearing 11 is made from POM material and has a self-lubricating function. The bearing 11 is provided with an elastic snap 111 for limiting position. The bearing 4 is fixed to the air inlet frame 1 of the air conditioner and a mounting hole of the fixing plate 10 via the elastic snap 111.

The electric motor 12 is electrically connected to a control board of the air conditioner, and is mounted on the air inlet frame 1 of the air conditioner via an electric motor mounting plate 13.

The working process and principle of the automatic dust-removing and cleaning device for a filter screen of an air conditioner according to the present application are described as follows.

When an automatic dust-removing and cleaning function of the air conditioner is started, a centrifugal wind wheel is stopped, and the electric motor is started to drive the driving gear to rotate. Then, the driving gear is engaged with the tooth grooves of the screen frame, which thus drives the filter screen to rotate. Since the dust-removing brush is located below the filter screen and is in contact with the filter screen, when the filter screen is rotating, the dust-removing brush may automatically remove the accumulated dust on the filter screen, such that the accumulated dust may fall into the dust-collecting box. Since the water inlet pipe connected to the water inlet of the dust-collecting box is connected to the water mouth of the water pan of the air conditioner, and the water outlet pipe connected to the water outlet of the dust-collecting box is connected to the outdoor drain system of the air conditioner, the accumulated dust removed from the filter screen may be flushed outside by the condensing water generated during the working process of the air conditioner directly.

Compared with the prior art, in the automatic dust-removing and cleaning device for a filter screen of an air conditioner provided by the present application, the accumulated dust on the filter screen can be automatically removed without the need for disassembling the air conditioner and taking the filter screen out, and the accumulated dust is discharged outdoors by the condensing water generated in the cooling process of the air conditioner, which may avoid the trouble that the user has to clean the filter screen manually.

The above described embodiments are only the preferred embodiments of the present application. It should be noted that, the present application is not limited to the above preferred embodiments, and the protection scope of the present application is defined by the claims. For the person skilled in the art, many modifications and improvements may be made to the present application without departing from the spirit and scope of the present application, and these modifications and improvements are also deemed to fall into the protection scope of the

## Claims

1. An automatic dust-removing and cleaning device for a filter screen of an air conditioner, comprising a filter screen, a driving mechanism, a driving gear, driven gears, a dust-removing brush and a dust-collecting box, wherein,
the filter screen is of a closed ring structure connected in an end-to-end manner, and comprises a screen frame provided with tooth grooves, and a screen wires;
the driving gear is mounted at one corner of an air inlet frame of the air conditioner and is engaged with the tooth grooves of the screen frame, each of the driven gears is mounted at each of other three corners of the air inlet frame of the air conditioner and is engaged with the tooth grooves of the screen frame, and the driving mechanism drives the driving gear to rotate;
the dust-collecting box is mounted at a bottom of the air inlet frame of the air conditioner, and is provided with a water inlet connected to a water inlet pipe, and a water outlet connected to a water outlet pipe; and
the dust-removing brush is mounted above the dust-collecting box, is located below the filter screen and is in contact with the filter screen.

2. The automatic dust-removing and cleaning device for the filter screen of the air conditioner according to claim 1, wherein the driving gear comprises one end connected to the air inlet frame of the air conditioner via a bearing, and the other end drivably connected to the driving mechanism via a connecting rod.

3. The automatic dust-removing and cleaning device for the filter screen of the air conditioner according to claim 2, wherein the driving gear comprises a gear, a stepped shaft and a position limiting member, and wherein the gear is mounted on the stepped shaft, is fixed by the position limiting member, and is provided with a position limiting plate for avoiding mismatch between the filter screen and the gear.

4. The automatic dust-removing and cleaning device for the filter screen of the air conditioner according to claim 1, wherein the driven gear comprises one end connected to the air inlet frame of the air conditioner via a bearing, and the other end connected to a fixing plate, and wherein the fixing plate is mounted on the air inlet frame of the air conditioner.

5. The automatic dust-removing and cleaning device for the filter screen of the air conditioner according to claim 4, wherein the driven gear comprises a gear, a stepped shaft and a position limiting member, and wherein the gear is mounted on the stepped shaft, is fixed by the position limiting member, and is provided with a position limiting plate for avoiding mismatch between the filter screen and the gear.

6. The automatic dust-removing and cleaning device for the filter screen of the air conditioner according to claim 2 or 4, wherein the bearing is made from POM material and is provided with an elastic snap for limiting position.

7. The automatic dust-removing and cleaning device for the filter screen of the air conditioner according to claim 1, wherein the water inlet pipe connected to the water inlet of the dust-collecting box is connected to a water mouth of a water pan of the air conditioner, and the water outlet pipe connected to the water outlet of the dust-collecting box is connected to an outdoor drain system of the air conditioner.

8. The automatic dust-removing and cleaning device for the filter screen of the air conditioner according to claim 1, wherein the closed ring structure of the filter screen is formed in the end-to-end manner by adhering, welding or screwing.

9. The automatic dust-removing and cleaning device for the filter screen of the air conditioner according to claim 1, wherein the driving mechanism is an electric motor electrically connected to a control board of the air conditioner and mounted on the air inlet frame of the air conditioner via an electric motor mounting plate.

10. The automatic dust-removing and cleaning device for the filter screen of the air conditioner according to claim 1, wherein the screen wires are high-density screen wires and have been soaked with a mildew-proof and antibacterial liquid medicine.
